# EUROPÄISCHE PATENTSCHRIFT

(11) **EP 2 036 753 B1**
(45) Veröffentlichungstag und Bekanntmachung des Hinweises auf die Patenterteilung: **13.02.2013**
(21) Anmeldenummer: 08010759.2
(22) Anmeldetag: 13.06.2008
(51) Int. Cl.: B60J 7/16

(54) **Ablegbare Dachanordnung für ein Cabriolet**
Collapsible roof fitting for a convertible
Agencement de capote pour un cabriolet

(30) Priorität: 07.09.2007 DE 102007042525
(43) Veröffentlichungstag der Anmeldung: 18.03.2009
(73) Patentinhaber: Dr. Ing. h.c. F. Porsche AG, 70435 Stuttgart (DE)
(72) Erfinder: Fröschle, Mathias, 73760 Ostfildern (DE); Schulzki, Markus, 71638 Ludwigsburg (DE)

(56) Entgegenhaltungen:
- EP-A- 1 281 552
- EP-A- 1 302 351
- DE-C1- 10 006 296

## Beschreibung

Bei der Erfindung wird ausgegangen von einer ablegbaren Dachanordnung für ein Cabriolet, gemäß Oberbegriff des Patentanspruchs 1.

Eine gattungsbildende ablegbare Dachanordnung ist aus der DE 100 06 296 C1 bekannt. Sie umfasst ein einen vorderen und hinteren Lenker aufweisendes Hauptgelenk, das für das Schließen und Ablegen der Dachanordnung um ein karosseriefestes Hauptlager bewegbar ist. An dem Hauptgelenk ist mit Abstand zu dem Hauptlager ein Hauptdachelement in ersten Gelenken abgestützt. Befindet sich die Dachanordnung in ihrer Schließstellung, in der sie einen Fahrzeugraum überspannt, befindet sich hinter dem Hauptdachelement ein Zusatzdachelement, welches eine starre Verbindungsanordnung aufweist, die über ein Verbindungsgestänge mit dem Hauptdachelement in zweiten Gelenken verbunden ist. Dabei weist das Verbindungsgestänge zwei Lenker auf, von denen einer zur Bewegungssteuerung des Zusatzdachelementes weiterhin mit dem vorderen Lenker des Hauptgelenks über einen Koppellenker verbunden ist.

Aufgabe der Erfindung ist es, eine ablegbare Dachanordnung anzugeben, bei dem das Zusatzdachelement auf einfache Art und Weise bewegt werden kann.

Gelöst wird diese Aufgabe mit einer ablegbaren Dachanordnung, die die in Anspruch 1 genannten Merkmale umfasst. Weitere Ausgestaltungen der Erfindung sind in den Unteransprüchen angegeben.

Die mit der Erfindung hauptsächlich erzielten Vorteile sind darin zu sehen, dass durch die direkte Einbindung des Zusatzdachelements in das Hauptgelenk über die starre Verbindungsanordnung und die Bewegungssteuerung durch den Koppellenker erfindungsgemäß eine geringe Anzahl von Getriebegliedern notwendig ist, da die Getriebeglieder von bereits vorhandenen Elementen der ablegbaren Dachanordnung gebildet sind. Das Zusatzdachelement weist somit die feststehende bzw. gegenüber dem Zusatzdachelement unbewegliche Verbindungsanordnung auf, die lediglich mit dem Hauptgelenk in einem der zweiten Gelenke schwenkbar verbunden ist. Damit kann die Dachanordnung auch einfach und kostengünstig aufgebaut werden. Zusätzlich ergibt sich eine sichere Funktionsweise der Dachanordnung, da wenige Getriebeglieder notwendig sind. Ferner kann von einer geringen Ablagehöhe der auch als Softtop bezeichneten Dachanordnung ausgegangen werden.

Besonders bevorzugt wird ein Ausführungsbeispiel gemäß Anspruch 2, bei dem das Hauptgelenk durch ein einfaches Viergelenkgetriebe gebildet wird, also einen vorderen und einen hinteren Lenker umfasst, die um das karosseriefeste Hauptlager bewegt werden. Zwischen dem vorderen Lenker und dem Zusatzdachelement ist erfindungsgemäß die starre Verbindungsanordnung eingesetzt. Das Zusatzdachelement ist somit in einer lediglich bevorzugten Ausführungsform mit dem vorderen Lenker direkt in einem Gelenk verbunden.

Nach einer in Anspruch 3 angegebenen Weiterbildung der Erfindung ist vorteilhaft, dass das Zusatzdachelement in Schließstellung der Dachanordnung von dem Hauptdachelement abgestützt werden kann.

Besonders bevorzugt wird die Erfindung verwendet in einer Dachanordnung, die neben dem Hauptdachelement und dem Zusatzdachelement noch ein dem Hauptdachelement vorgeordnetes Vorderdachelement aufweist, wie dies in Anspruch 4 angegeben ist. Dabei bildet das Vorderdachelement eine so genannte Dachspitze bzw. es weist diese Dachspitze auf und das Hauptdachelement und das Zusatzdachelement bilden Formgebungsabschnitte für einen vorzugsweise für die Dachanordnung vorgesehenen Verdeckbezug, so dass das eingangs erwähnte Softtop gebildet werden kann.

Für einen vereinfachten Steuerungsaufwand kann gemäß Anspruch 5 vorgesehen sein, dass das Vorderdachelement steuerungsmäßig in das Hauptgelenk eingebunden ist.

Gemäß einem in Anspruch 6 angegebenen Ausführungsbeispiel ist vorteilhaft, dass eine durchgehende Dachfläche bereitgestellt wird, die bis zu einer vorzugsweise vorgesehenen Heckscheibe reichen kann, die in den nach Anspruch 7 vorgesehenen Verdeckstoff eingebunden ist. Bevorzugt wird allerdings eine Ausführung, nach der die Heckscheibe in ein Heckdachelement eingesetzt (Anspruch 9) ist. Das Heckdachelement kann zur Bewegungssteuerung direkt oder indirekt in das Hauptgelenk eingebunden sein oder alternativ einen eigenen Antrieb aufweisen; es kann separat an der Karosserie oder direkt oder indirekt an einem Verdecklager abgestützt sein. Vorzugsweise reicht der Verdeckbezug bzw. Verdeckstoff bis über das Heckdachelement hinweg und weist einen Ausschnitt für die Heckscheibe auf.

Nach einem Ausführungsbeispiel gemäß Anspruch 8 ist vorgesehen, dass die Heckscheibe zumindest in Schließstellung der Dachanordnung in den Verdeckstoff eingebunden ist. Vorzugsweise erfolgt eine feste Einbindung der Heckscheibe in den Verdeckstoff, ggf. über das Heckdachelement.

Gemäß Anspruch 10 kann in einer abgewandelten Ausführungsform die starre Verbindungsanordnung und/oder der Koppellenker abgewinkelt und/oder gebogen (abschnittsweise oder kontinuierlich) ausgeführt sein.

Die Erfindung wird nachfolgend anhand eines Ausführungsbeispiels mit Bezug auf die Zeichnung näher erläutert. Es zeigen:
- Fig. 1: schematisch in einer Seitenansicht eine ablegbare Dachanordnung für ein Cabriolet in einer ersten Teilöffnungsstellung TE1, die nahe einer vollständigen, nicht dargestellten Schließstellung liegt;
- Fig. 2: die ablegbare Dachanordnung nach Fig. 1 in einer zweiten Teilöffnungsstellung TE2, die einer nicht gezeigten Ablagestellung näher ist; und
- Fig. 3: eine gegenüber Fig. 1 abgewandelte Dachanordnung in der ersten Teilöffnungsstellung TE1.

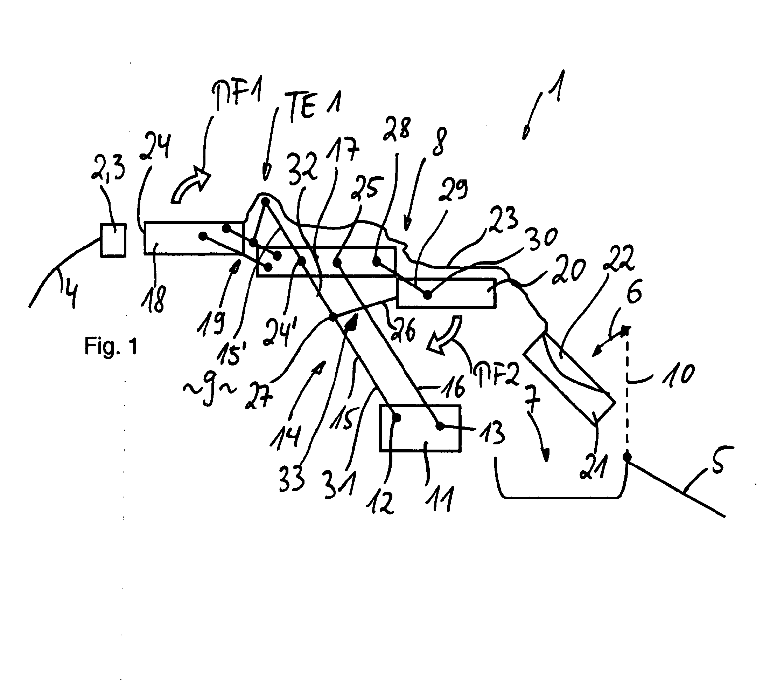

In Fig. 1 ist ausschnittweise stark vereinfacht von einem offenen Kraftfahrzeug 1, das auch als Cabriolet bezeichnet wird, eine Karosserie 2 mit einem oberen quer verlaufenden Abschnitt 3 eines Windschutzscheibenrahmens gezeigt, der eine Windschutzscheibe 4 einfasst. Von der Karosserie 2 ist ferner ein Heckabschnitt 5 angedeutet, der zu einem nicht dargestellten heckseitigen Ende des Kraftfahrzeugs führt. In dem Heckabschnitt 5 ist ein Aufnahmekasten 7 ausgebildet, in den hinein eine Dachanordnung 8 aus einer nicht gezeigten Schließstellung ablegbar ist, um einen unter der Dachanordnung 8 liegenden Fahrgastraum 9 in einer Ablagestellung (nicht gezeigt) der Dachanordnung 8 nach oben hin freigeben zu können. In der Schließstellung erstreckt sich die Dachanordnung 8 von dem vorderen Abschnitt 3 bzw. daran anliegend bis zu dem Heckabschnitt 5, dem hier noch ein so genannter Verdeckkastendeckel 10 zugeordnet ist, der bewegbar ist und den Aufnahmekasten 7 verschließen oder freigeben kann, was durch einen Pfeil 6 angedeutet ist. An der Karosserie 2 ist ferner noch ein so genanntes Hauptlager 11, vorzugsweise feststehend, angeordnet, welches auch als Verdecklager für die Dachanordnung 8 bezeichnet werden kann.

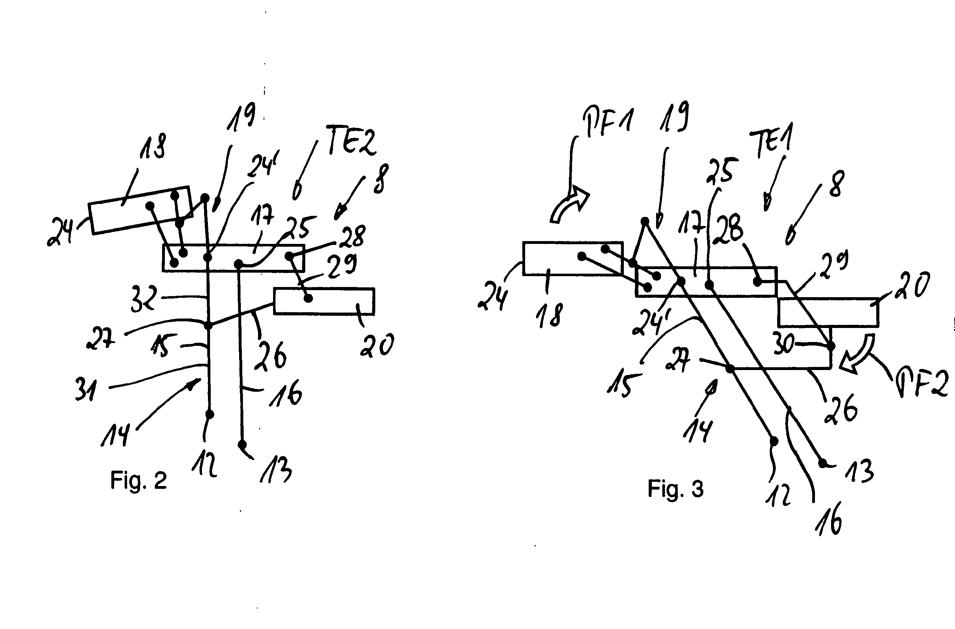

Anhand der Fig. 1 und 2 wird die ablegbare Dachanordnung 8 im Folgenden näher erläutert, wobei dort die unterschiedlichen Teilöffnungsstellungen TE1 und TE2 der Dachanordnung zu sehen sind, die zwischen der Schließstellung und der Ablagestellung liegen. An dem Hauptlager 11 ist in Schwenklagern 12 und 13 ein Hauptgelenk 14 befestigt, das in Fahrzeuglängsrichtung FL gesehen zumindest einen vorderen Lenker 15 sowie einen hinteren Lenker 16 aufweist und auf das zum Bewegen der Dachanordnung 8 ein hier nicht gezeigter Antrieb wirkt. Die beiden Lenker 15 und 16 können gebogen ausgeführt sein und tragen etwa im Bereich ihres freien Endes ein Hauptdachelement 17. Dem Hauptdachelement 17 vorgelagert, d.h. in Schließstellung vor dem Hauptdachelement 17 angeordnet, ist ein Vorderdachelement 18, welches über ein Koppelgestänge 19 in die Bewegung des Hauptdachelements 17 steuerungsmäßig eingebunden ist. Der vordere Lenker 15 ist mit einem Abschnitt bzw. einer Verlängerung 15' Bestandteil dieses Koppelgestänges 19.

Die Dachanordnung 8 weist ferner ein Zusatzdachelement 20 auf, welches in der Schließstellung hinter dem Hauptdachelement 17 angeordnet ist. Dem Zusatzdachelement 20 nachgeordnet ist noch ein Heckdachelement 21 mit einer davon eingerahmten Heckscheibe 22, die vorzugsweise fest mit einem Verdeckstoff 23 verbunden bzw. darin eingebunden ist. Der Verdeckstoff 23 erstreckt sich vorzugsweise von der vorderen Dachspitze 24 am Dachelement 18 bis zu dem bzw. bis über das Heckdachelement 21 und ggf. auch darüber hinweg bis zu einem heckseitigen, nicht gezeigten Anbindungsrand für den Verdeckstoff 23.

Im Bereich der freien Enden der Lenker 15 und 16 ist das Hauptdachelement 17 in ersten Gelenken 24' und 25, die vorzugsweise ein nebeneinander liegendes Gelenkpaar bilden, mit dem Hauptgelenk 14 verbunden. Somit bilden die Lenker 15 und 16 und das Hauptdachelement 17 ein einfaches Viergelenk mit den Gelenken 12, 13, 24' und 25.

Über eine starre Verbindungsanordnung 26 und einen separaten Koppellenker 29 ist das Zusatzdachelement 20 mit dem Hauptgelenk 14 und dem Hauptdachelement 17 verbunden, wofür zweite Gelenke 27 und 28 vorgesehen sind, von denen das Gelenk 27 an dem Lenker 15 zwischen dem ersten Gelenk 24' und dem Schwenklager 12 angeordnet ist. Der Koppellenker 29 ist mit seinem einen Ende in dem zweiten Gelenk 28 und mit seinem anderen Ende in einem weiteren bzw. dritten Gelenk 30 mit dem Zusatzdachelement 20 verbunden. Der vordere Lenker 15 weist zwischen dem Schwenklager 12 und dem zweiten Gelenk 27 einen unteren Lenkerabschnitt 31 und zwischen dem zweiten Gelenk 27 und dem ersten Gelenk 24' einen oberen Lenkerabschnitt 32 auf. Somit bilden der oberer Lenkerabschnitt 32, abschnittweise das Hauptdachelement 17, der Koppellenker 29 und das Zusatzdachelement mit seiner fest daran angebrachten Verbindungsanordnung 26 Getriebeglieder eines viergliedrigen Koppelgetriebes 33 für das Zusatzdachelement 20. Dabei kann der Koppellenker 29 mit seinem Gelenk 30 entweder an dem Zusatzdachelement 20 oder an der Verbindungsanordnung 26 angelenkt sein, wie es Fig. 3 zeigt.

In Fig. 1 ist noch zu sehen, dass das Vorderdachelement 18, das Hauptdachelement 17 und das Zusatzdachelement 20 und ggf. das Heckdachelement 21 durchgehende bzw. in Reihe angeordnete Formgebungsabschnitte für den Verdeckbezug 23 bilden, die also dem Verdeckbezug 23 in Schließstellung eine äußere Form bzw. Dachkontur aufprägen und ihn tragen. Die Dachelemente 17 und 20 bilden mithin Flächenspriegel, die in Fahrzeuglängsrichtung FL eine entsprechende Längserstreckung aufweisen. Die Dachelemente 17, 18 und 20 und ggf. 21 grenzen in Reihe liegend aneinander an bzw. bilden in der Schließstellung eine Reihe.

Im abgewandelten Ausführungsbeispiel einer Dachanordnung 8 nach Fig. 3 sind/ist der Koppellenker 29 und/oder die Verbindungsanordnung 26 abgewinkelt bzw. gebogen ausgeführt. Der Koppellenker 29 kann an dem Zusatzdachelement 20 oder - wie gezeigt - an der Verbindungsanordnung 26 in dem Gelenk 30 angelenkt sein. Ansonsten sind in Fig. 3 gleiche bzw. gleich wirkende Teile mit denselben Bezugszeichen versehen. Es sei noch erwähnt, dass in der nicht gezeigten Ablagestellung der Dachanordnung 8 zuoberst das Vorderdachdachelement 18, darunter das Hauptdachelement 17, darunter das Zusatzdachelement 20 und - sofern vorgesehen - darunter das Heckdachelement 21 übereinander im Ablagekasten 7 liegen. Vorzugsweise ist ferner vorgesehen, dass das Heckdachelement 21 mit einem hier nicht gezeigten Lenker an dem Hauptgelenk 14 und insbesondere an dem hinteren Lenker 16 angesteuert ist und sich außerdem über eine gelenkige Abstützung (nicht gezeigt) mit zumindest einem Lenker an der Karosserie 2 abstützt.

## Patentansprüche

1. Ablegbare Dachanordnung (8) für ein Cabriolet, mit einem zumindest zwei Lenker (15, 16) umfassenden und um ein Hauptlager (11) bewegbaren Hauptgelenk (14), einem Hauptdachelement (17), das in ersten Gelenken (24', 25) mit dem Hauptgelenk (14) verbunden ist, zumindest einem - in einer Schließstellung der Dachanordnung (8) - hinter dem Hauptdachelement (17) angeordneten Zusatzdachelement (20) und mit einer starren Verbindungsanordnung (26) für das Zusatzdachelement (20), das in zweiten Gelenken (27, 28) mit dem Hauptgelenk (14) und dem Hauptdachelement (17) verbunden ist, **dadurch gekennzeichnet, dass** die starre Verbindungsanordnung (26) in einem der zweiten Gelenke (27) direkt schwenkbar mit dem Hauptgelenk (14) verbunden ist und dass die Verbindungsanordnung (26) zusammen mit dem Zusatzdachelement (20), dem Hauptgelenk (14), dem Hauptdachelement (17) und einem Koppellenker (29) ein viergliedriges Koppelgetriebe (33) bilden, wobei sich der Koppellenker (29) zwischen dem Hauptdachelement (17) und dem Zusatzdachelement (20) oder der starren Verbindungsanordnung (26) erstreckt.

2. Dachanordnung nach Anspruch 1, **dadurch gekennzeichnet, dass** das Hauptgelenk (14) einen vorderen und einen hinteren Lenker (15, 16) umfasst und dass zwischen dem vorderen Lenker (15) und dem Zusatzdachelement (20) die starre Verbindungsanordnung (26) des Koppelgetriebes (33) angeordnet ist.

3. Dachanordnung nach Anspruch 1 oder 2, **dadurch gekennzeichnet, dass** in Schließstellung der Dachanordnung (8) das Hauptdachelement (17) und das Zusatzdachelement (20) aneinander liegen.

4. Dachanordnung nach einem der vorhergehenden Ansprüche, **gekennzeichnet durch** ein - in Schließstellung der Dachanordnung (8) - dem Hauptdachelement (17) vorgeordnetes Vorderdachelement (18).

5. Dachanordnung nach Anspruch 5, **dadurch gekennzeichnet, dass** das Vorderdachelement (18) in das Hauptgelenk (14) steuerungsmäßig (Koppelgestänge 19) eingebunden ist.

6. Dachanordnung nach einem der vorhergehenden Ansprüche, **dadurch gekennzeichnet, dass** in Schließstellung der Dachanordnung (8) das Vorderdachelement (18), das Hauptdachelement (17) und das Zusatzdachelement (20) in Reihe hintereinander liegen und den Fahrgastraum (9) überspannen.

7. Dachanordnung nach einem der vorhergehenden Ansprüche, **gekennzeichnet durch** einen Verdeckstoff (23), der von den Dachelementen (17, 18, 20, 21) gestützt wird.

8. Dachanordnung nach einem der vorhergehenden Ansprüche, **gekennzeichnet durch** eine Heckscheibe (22), die in den Verdeckstoff (23) zumindest in Schließstellung der Dachanordnung (8) eingebunden ist.

9. Dachanordnung nach einem der vorhergehenden Ansprüche, **gekennzeichnet durch** ein Heckdachelement (21), das sich in Schließstellung der Dachanordnung (8) an das Zusatzdachelement (20) anschließt.

10. Dachanordnung nach einem der vorhergehenden Ansprüche, **dadurch**
**gekennzeichnet, dass** der Koppellenker (29) und/oder die Verbindungsanordnung (26) abgewinkelt und/oder gebogen ausgeführt sind.

## Claims

1. Collapsible roof arrangement (8) for a cabriolet, having a main joint (14) which comprises at least two links (15, 16) and can be moved about a main bearing (11), a main roof element (17) which is connected to the main joint (14) in first joints (24', 25), at least one additional roof element (20) which is arranged behind the main roof element (17) in a closed position of the roof arrangement (8), and having a rigid connecting arrangement (26) for the additional roof element (20) which is connected to the main joint (14) and the main roof element in second joints (27, 28), **characterized in that** the rigid connecting arrangement (26) is directly connected pivotably to the main joint (14) in one of the second joints (27), and **in that** the connecting arrangement (26) forms a four-member coupler mechanism (33) together with the additional roof element (20), the main joint (14), the main roof element (17) and a coupling link (29), the coupling link (29) extending between the main roof element (17) and the additional roof element (20) or the rigid connecting arrangement (26).

2. Roof arrangement according to Claim 1, **characterized in that** the main joint (14) comprises a front and a rear link (15, 16) and **in that** the rigid connecting arrangement (26) of the coupler mechanism (33) is arranged between the front link (15) and the additional roof element (20).

3. Roof arrangement according to Claim 1 or 2, **characterized in that**, in the closed position of the roof arrangement (8), the main roof element (17) and the additional roof element (20) bear against one another.

4. Roof arrangement according to one of the preceding claims, **characterized by** a front roof element (18) which is arranged in front of the main roof element (17) in the closed position of the roof arrangement (8).

5. Roof arrangement according to Claim 5, **characterized in that** the front roof element (18) is incorporated in control terms (coupler linkage 19) into the main joint (14).

6. Roof arrangement according to one of the preceding claims, **characterized in that**, in the closed position of the roof arrangement (8), the front roof element (18), the main roof element (17) and the additional roof element (20) lie in a row one behind another and span the passenger compartment (9).

7. Roof arrangement according to one of the preceding claims, **characterized by** a hood material (23) which is supported by the roof elements (17, 18, 20, 21).

8. Roof arrangement according to one of the preceding claims, **characterized by** a rear window (22) which is incorporated into the hood material (23), at least in the closed position of the roof arrangement (8).

9. Roof arrangement according to one of the preceding claims, **characterized by** a rear roof element (21) which adjoins the additional roof element (20) in the closed position of the roof arrangement (8).

10. Roof arrangement according to one of the preceding claims, **characterized in that** the coupling link (29) and/or the connecting arrangement (26) are/is of bent-away and/or curved configuration.

## Revendications

1. Agencement de toit escamotable (8) pour un cabriolet, comprenant une articulation principale (14) comprenant au moins deux bras oscillants (15, 16) et déplaçable autour d'un palier principal (11), un élément de toit principal (17), qui est connecté à l'articulation principale (14) dans des premières articulations (24', 25), au moins un élément de toit supplémentaire (20) disposé derrière l'élément de toit principal (17) dans une position de fermeture de l'agencement de toit (8), et comprenant un agencement de liaison rigide (26) pour l'élément de toit supplémentaire (20) qui est connecté à l'articulation principale (14) et à l'élément de toit principal (17) dans des deuxièmes articulations (27, 28), **caractérisé en ce que** l'agencement de liaison rigide (26) est connecté directement à l'articulation principale (14) de manière pivotante dans l'une des deuxièmes articulations (27) et **en ce que** l'agencement de liaison (26), conjointement avec l'élément de toit supplémentaire (20), l'articulation principale (14), l'élément de toit principal (17) et un bras oscillant d'accouplement (29) forment un mécanisme articulé (33) à quatre membres, le bras oscillant d'accouplement (29) s'étendant entre l'élément de toit principal (17) et l'élément de toit supplémentaire (20) ou l'agencement de liaison rigide (26).

2. Agencement de toit selon la revendication 1, **caractérisé en ce que** l'articulation principale (14) comprend un bras oscillant avant et un bras oscillant arrière (15, 16) et **en ce qu'**entre le bras oscillant avant (15) et l'élément de toit supplémentaire (20) est disposé l'agencement de liaison rigide (26) du mécanisme articulé (33).

3. Agencement de toit selon la revendication 1 ou 2, **caractérisé en ce que** dans la position de fermeture de l'agencement de toit (8), l'élément de toit principal (17) et l'élément de toit supplémentaire (20) s'appliquent l'un contre l'autre.

4. Agencement de toit selon l'une quelconque des revendications précédentes, **caractérisé par** un élément de toit avant (18) disposé avant l'élément de toit principal (17) - dans la position de fermeture de l'agencement de toit (8).

5. Agencement de toit selon la revendication 5, **caractérisé en ce que** l'élément de toit avant (18) est intégré par commande (tringlerie d'accouplement 19) dans l'articulation principale (14).

6. Agencement de toit selon l'une quelconque des revendications précédentes, **caractérisé en ce que** dans la position de fermeture de l'agencement de toit (8), l'élément de toit avant (18), l'élément de toit principal (17) et l'élément de toit supplémentaire (20) sont disposés en rang les uns derrière les autres et couvrent l'habitacle de conduite (9).

7. Agencement de toit selon l'une quelconque des revendications précédentes, **caractérisé par** une toile de capote (23) qui est supportée par les éléments de toit (17, 18, 20, 21).

8. Agencement de toit selon l'une quelconque des revendications précédentes, **caractérisé par** une vitre arrière (22) qui est intégrée dans la toile de capote (23) au moins dans la position de fermeture de l'agencement de toit (8).

9. Agencement de toit selon l'une quelconque des revendications précédentes, **caractérisé par** un élément de toit arrière (21) qui se raccorde dans la position de fermeture de l'agencement de toit (8) à l'élément de toit supplémentaire (20).

10. Agencement de toit selon l'une quelconque des revendications précédentes, **caractérisé en ce que** le bras oscillant d'accouplement (29) et/ou l'agencement de liaison (26) sont réalisés sous forme coudée et/ou cintrée.
